**Europäisches Patentamt**

**European Patent Office**

**Office européen des brevets**

(19)

(11) Publication number: **0 025 655**
**A1**

# (12) EUROPEAN PATENT APPLICATION

(21) Application number: **80302940.4**

(22) Date of filing: **26.08.80**

(51) Int. Cl.³: **G 05 D 23/275,** G 01 M 13/00

(30) Priority: **29.08.79 GB 7929866**

(43) Date of publication of application: **25.03.81**
**Bulletin 81/12**

(84) Designated Contracting States: **AT BE CH DE FR IT LI LU NL SE**

(71) Applicant: **Pounder, Robert Corner,**
**"Windrush" 22 Eddisbury Road West Kirby, Wirral**
**Merseyside (GB)**

(72) Inventor: **Pounder, Robert Corner,**
**"Windrush" 22 Eddisbury Road West Kirby, Wirral**
**Merseyside (GB)**

(74) Representative: **Adams, Thomas et al,**
**ROYSTONS 531 Tower Building Water Street, Liverpool**
**L3 1BA (GB)**

(54) **Fluid temperature control.**

(57) Apparatus, for controlling the temperature of a fluid for calibrating or testing equipment, comprises a heat exchanger (10) for connection to the equipment and through which the fluid will pass to the equipment and means (15-20) for sensing the temperature of the fluid and controlling application of heat to, or removal of heat from, fluid in the heat exchanger in dependence upon the temperature sensed. Typically the temperature sensing means (15-20) controls operation of a heat extractor (23) or a heater (30), in dependence upon whether the fluid temperature sensed is above or below a desired fluid temperature. The temperature sensing means preferably has an elongate element (16) disposed in a sleeve (15) to form an annular passage (18) through which the fluid will pass to the equipment. The heat extractor may be connected as the evaporator coil (23) of a refrigeration device.

Applicant:   Robert Corner Founder

Title:   Fluid Temperature Control


## DESCRIPTION

The invention relates to temperature control of
fluids and is especially applicable to controlling the
temperature of liquids used in testing or calibrating
hydraulic equipment, for example, diesel engine pumps
and fuel injectors.

In testing such equipment the accuracy of the test
results will be affected by variation in the viscosity
of the fluid, e.g. calibrating oil, which of course is
dependent upon its temperature.

Usually the calibrating oil is drawn from a large
reservoir wherein it is maintained at a fairly constant
temperature by an immersion or like heater.   This
arrangement has been found in practice to be
unsatisfactory for accurate calibration work since it
does not take account of variation of the temperature of
the calibrating oil, as applied to the equipment under
test, for example because of heating of the oil by use.

An object of the present invention is to provide
means for controlling the temperature of the fluid
more accurately.

Thus, according to the present invention,
apparatus for controlling the temperature of a fluid for calibrating or testing equipment comprises a heat exchanger for connection to the equipment and through which the fluid will pass thereto, means for sensing the temperature of the fluid, and in dependence upon the temperature sensed controlling application of heat to, on removal of heat from, the fluid in the heat exchanger.

The fluid temperature sensing means, which is preferably positioned at the output of the heat exchanger, advantageously may comprise an elongate element disposed in a sleeve so as to provide an annular passage through which the fluid must pass. Such an arrangement ensures uniform intimate application of the fluid to the entire length of the temperature sensing element, thus facilitating accurate sensing of the fluid temperature even at high fluid flow rates.

In preferred embodiments the temperature sensing means controls, conveniently via switching means, operation of either a heat extractor, or a heater, in dependence upon whether the fluid temperature sensed is higher or lower than a desired temperature.

The heat extractor may comprise a refrigerant evaporator coil housed in a chamber through which the fluid will pass in use. Such evaporator coil may be coupled to a conventional refrigerator unit, conveniently of the compression type having a compressor, condenser and a capillary metering device to meter liquid refrigerant into the evaporator coil.

By-pass means may be provided for coupling the output of the condenser of such refrigeration unit directly to the evaporator coil, so that hot liquid or gas, i.e. the compressed refrigerant, from the condenser is injected directly into the evaporator coil.

The by-pass means may be controlled by a fluid regulator valve, conveniently solenoid operated in conjunction with the heating means.

In an especially compact embodiment the evaporator coil and its housing are cylindrical, and means for heating the fluid comprises an elongate electrical immersion heater element extending generally coaxially within the evaporator coil from one end of the housing.

The switching means operated by the temperature sensor may be arranged to switch directly from one mode to the other according to whether the temperature sensed is above or below a predetermined level, perhaps with hysteresis providing a small range, say $\pm 2^{\circ}C$ between highest and lowest switching temperatures.

Alternatively the arrangement may be such that one or more switches and/or elements are operated on transition of respective different temperature settings.

An embodiment of the invention will now be described by way of example only and with reference to the accompanying drawings in which:-

Figure 1 is a side elevation of apparatus for controlling the temperature of oil;

Figure 2 is an end elevation;

Figure 3 is a plan view;

Figure 4 is a part sectional view of a heat exchanger of the apparatus, and associated thermostat; and

Figure 5 is a schematic diagram of the appartus, including a modification.

Referring to the drawings, apparatus for controlling the temperature of oil for use in calibrating diesel engine pumps, fuel injectors or the like, comprises a heat exchanger 10 formed by a copper cylinder 11 having an inlet 12 at one end and an outlet 13 at the opposite end. A connector 14 couples the outlet 13 to a tube 15 which extends parallel to the cylinder 11 and in which is located the sensing element 16 of a thermostat 17. The element is of lesser diameter than the interior of the tube so providing an annular space 18 therebetween which is sealed at that end from which the element protrudes. The thermostat is of conventional form and has an electric switch 35 housed in a casing 19. The temperature at which the switch operates can be set by means of a control knob 20.

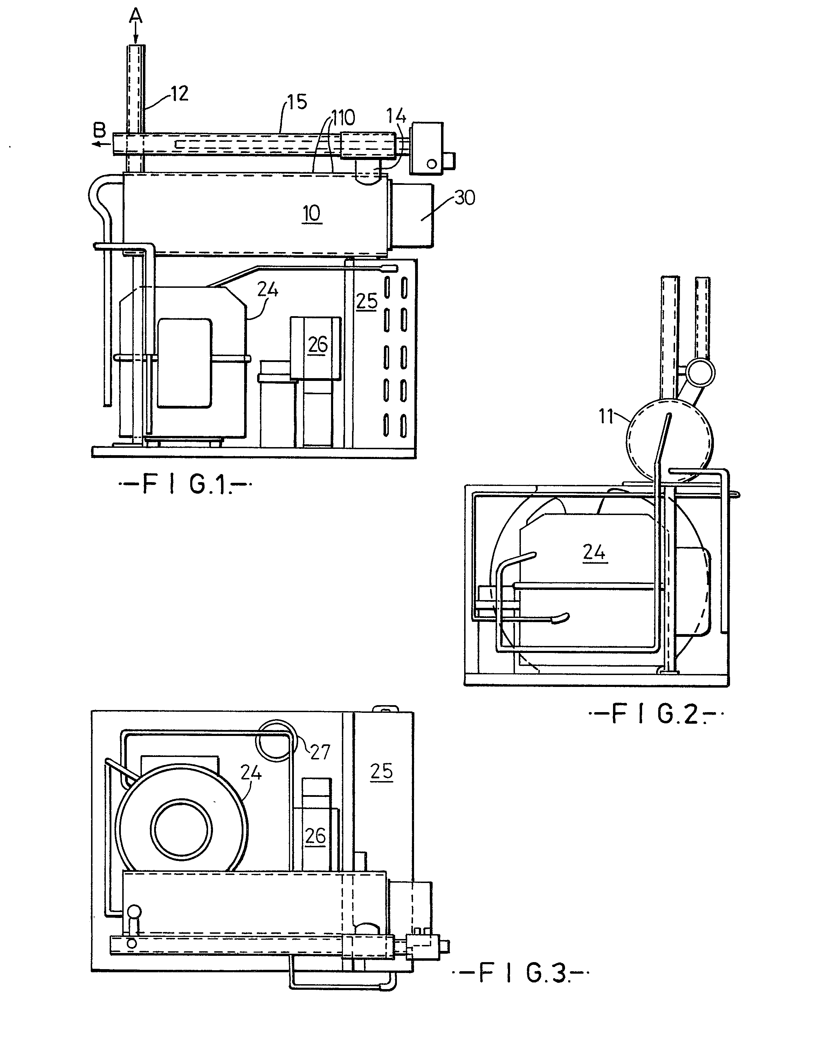

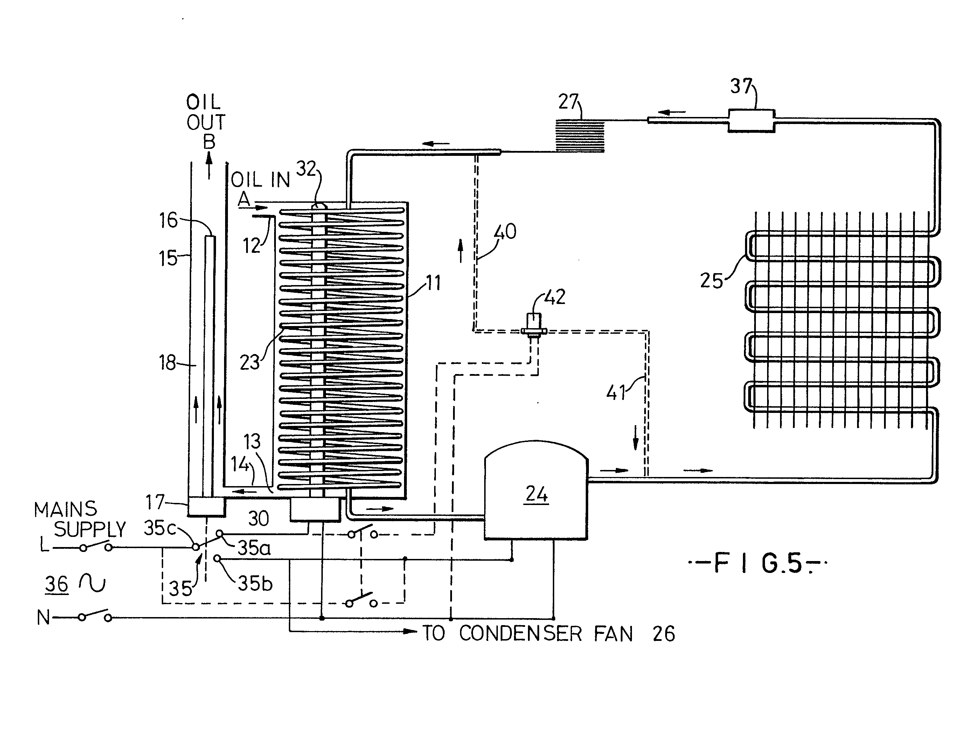

The heat exchanger cylinder 11 houses a close coiled helical coil 23 of $\frac{3}{8}$" diameter copper tube. The coil 23 is of only slightly lesser external diameter than the interior of the cylinder and constitutes the evaporator of a refrigeration unit. The remaining parts of the refrigeration unit are of conventional construction and comprise a motor compressor 24, condenser 25 and condenser fan 26. A capillary-type metering device 27 meters the liquid refrigerant from the condenser 25 into the evaporator coil 23 (see Figures 3 and 5). A drier 37 may be provided between the condenser 25 and the evaporator coil 23.

One end of the cylinder 11 is closed by a brass end plate 28 and the other end by an annular brass plate 29 internally screwthreaded to receive an immersion heater 30 such that its three heating elements 32 (two only are shown) extend axially into the cylinder 11 within the evaporator coil 10. The heater, of 1kw capacity, is specially suited for heating oil and viscous substances.

The immersion heater element is connected to one contact of the changeover switch 35a of the thermostat, the other contact 35b being connected to the refrigeration unit compressor motor 24. The changeover contact 35c is connected to a switched power supply means 36.

In use, calibrating oil from a reservoir enters the inlet pipe 12, as indicated by arrow A, passes axially along the cylinder 11, through the outlet 14 and into the annular space 16 between the thermostat element and the tube 15. The oil leaves the tube 15 as indicated by arrow B and thence passes to the equipment under test.

If the oil temperature is too high the thermostat operates switch 35 to connect the electrical supply 36 via switch contact 35b to the compressor 24 of the refrigeration unit to cool the oil as it passes through and around the evaporator coil 23. On the other hand if the oil is too cool, the thermostat switches the electrical supply 36 via switch contact 35a to the immersion heater.

The thermostat is designed so that, when the temperature is within a predetermined range, typically $2^{o}C$, neither the refrigeration unit nor the heater are energised.

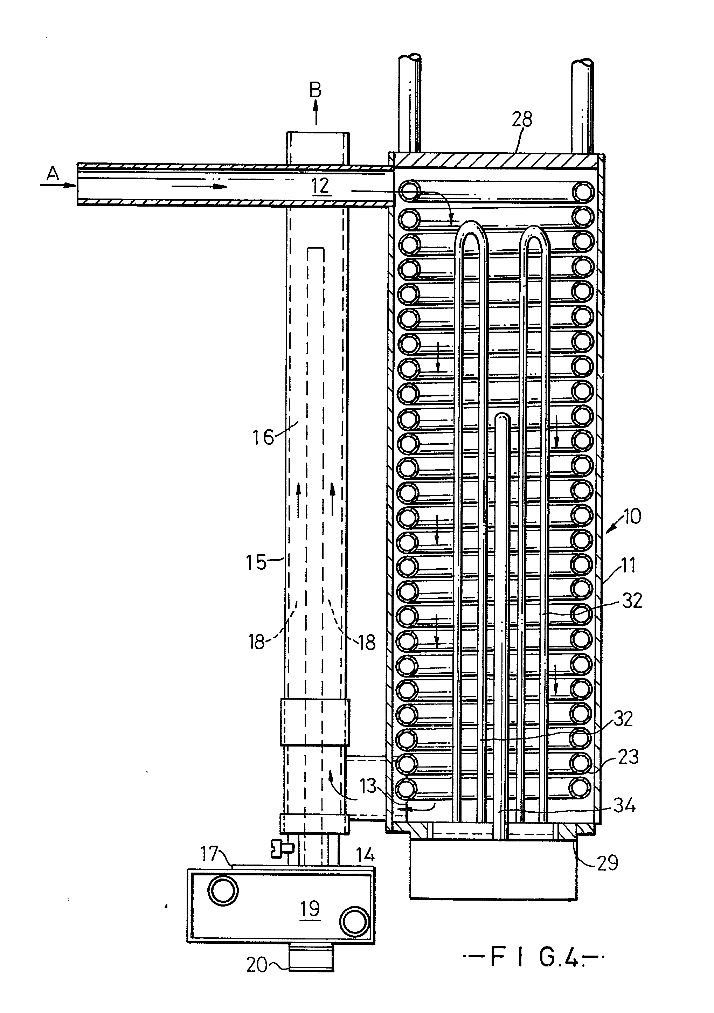

Preferably a further thermostat 34 is provided, as a safety device, ( conveniently extending within the immersion heater coils as shown in Figure 4) to disconnect the electrical supply 36 from the heater at a given temperature. This is of particular advantage for combustible fluids to ensure that the temperature does not exceed the flash point.

It will be appreciated that embodiments of the invention yield significant advantages over known systems where the oil is heated in a reservoir. In particular, the apparatus can be located immediately adjacent the equipment to be tested and, if desired, connected in a closed circulation system with the equipment.

Moreover, the provision of a refrigeration unit facilitates fast reaction to overheating of the oil, say in the equipment under test, by providing positive cooling of the oil rather than merely allowing the oil to cool by discontinuing heating.

Greater accuracy is also afforded by the disposition of the thermostat element in an outlet tube ensuring that the fluid must flow over substantially the entire length of the element, and also that the temperature of the fluid is sensed immediately before it leaves the apparatus.

Although not immediately apparent from the drawings, the heat exchanger slopes upwards at about $5^{\circ}$ towards the outlet end. It has been found that this arrangement is especially advantageous because it reduces the incidence of air bubbles or voids forming in the fluid which would reduce effective heat exchange. Nevertheless a certain amount of turbulent flow is desirable to ensure uniform heating/cooling and this is assisted by the spacing between individual turns of the evaporator coil 23.

It will be appreciated that the specific embodiment might be modified in various ways within the scope of the invention. For example, the immersion heater might be dispensed with and the refrigeration unit adapted to operate as a reversible heat pump i.e. the evaporator coil being used as the heater. However, such an arrangement would probably be more complex and less quick to react to temperature variation as the previously described embodiment so would probably be used for controlling fluid temperatures in fields other than equipment calibration etc. where accuracy is not paramount

One possible modification is illustrated in broken lines in Figure 5 and comprises a by-pass line 40, 41 which connects the output of the compressor 24 by way of a solenoid operated valve 42, directly to the input of the evaporator coil 23, in effect by-passing the condenser 25, drier 37 and capillary device 27. The operating coil of the solenoid valve 42 is connected via one pole of a double pole switch 38, in parallel with the immersion heater 30. The other pole of switch 38 connects the compressor 24 directly to the supply 36. Closure of switch 38 renders the by-pass system operative.

In operation, when the thermostat switches the electrical supply to the immersion heater 30, valve 42 is opened and condenser 25 acts as a heat pump, injecting hot refrigerant liquid/gas directly into the evaporator coil 23. This is of considerable benefit at the commencement of a test sequence and experiments have shown that warm-up time can be reduced by approximately 50%.

It should be noted that the compressor 24 may be connected directly to the supply 36, whether the by-pass is fitted or not.

Applicant:   Robert Corner Pounder

Title:  Fluid Temperature Control


CLAIMS


1.   Apparatus, for controlling the temperature of a
fluid for calibrating or testing equipment, comprising
a heat exchanger for connection to the equipment and
through which the fluid will pass to the equipment and
means for sensing the temperature of the fluid and
controlling application of heat to, or removal of heat
from, fluid in the heat exchanger in dependence upon
the temperature sensed.

2.   Apparatus as claimed in claim 1, wherein the
temperature sensing means comprises an elongate element
disposed in a sleeve to form an annular passage through
which the fluid will pass to the equipment.

3.   Apparatus as claimed in claim 1 or 2, wherein
the temperature sensing means controls operation of a
heat extractor or a heater, in dependence upon whether
the fluid temperature sensed is above or below a
desired fluid temperature.

4.   Apparatus as claimed in claim 2, including
switching means for controlling operation of the heat extractor
and heater in response to the temperature sensing means.

5.   Apparatus as claimed in claim 1, 2, 3 or 4,
wherein the heat exchanger comprises a helical tubular coil housed in a chamber through which the fluid will pass to the equipment.

6. Apparatus as claimed in claim 5, wherein the coil comprises the evaporator coil of a refrigeration device including a refrigerant fluid compressor.

7. Apparatus as claimed in claim 6, including a fluid control valve to control passage of refrigerant fluid along a fluid passage extending between the compressor and the evaporator coil.

8. Apparatus as claimed in claim 3, wherein the heater includes an immersion heater element extending in a or the chamber through which the fluid will pass to the equipment.

9. Apparatus as claimed in claim 7 with claim 3, wherein the valve is coupled to the heater for operation therewith.

10. Apparatus as claimed in claim 1, wherein the heat exchanger slopes upwardly in the direction of fluid-flow therethrough.

-FIG.1.-

-FIG.2.-

-FIG.3.-

—F I G.4.—

OIL
OUT
B

OIL IN 32

16
15
18

12
23
13
14
17
30

11

40

42

41

27
37

25

24

MAINS
SUPPLY
L
36
N

35c
35
35a
35b

TO CONDENSER FAN 26

—F I G.5.—

3/3

0025655

**European Patent Office**

**EUROPEAN SEARCH REPORT**

0025655

Application number

EP 80 30 2940

| Category | DOCUMENTS CONSIDERED TO BE RELEVANT | | CLASSIFICATION OF THE APPLICATION (Int. Cl.³) |
|---|---|---|---|
| | Citation of document with indication, where appropriate, of relevant passages | Relevant to claim | |
| | US - A - 3 557 565 (W. KISSEL)<br>  * Column 1, lines 39-44; column 2, lines 36-69; column 4, line 11-32; figure 1 *<br>-- | 1,3,4 | G 05 D 23/275<br>G 01 M 13/00 |
| | US - A - 3 465 564 (J. COLE)<br>  * Column 2, line 48 to column 3, line 12; figure *<br>-- | 1,3,4 | |
| | US - A - 3 680 630 (P. WATTS)<br>  * Column 2, lines 3-21; figure 1 *<br>-- | 1,5 | **TECHNICAL FIELDS SEARCHED (Int. Cl.³)** |
| | US - A - 2 645 461 (C. BROWN)<br>  * Column 3, line 71 to column 4, line 21; figure 1 *<br>-- | 1,5 | G 05 D 23/275<br>G 05 D 23/19<br>G 05 D 23/24<br>G 01 M 13/00 |
| | DE - A - 1 404 918 (A. ECKERFELD)<br>  * Page 4, line 3 to page 5, line 8; figure *<br>-- | 1,2,8 | |
| | US - A - 3 809 856 (R. WILLS)<br>  * Column 3, lines 31-54; figure 1 *<br>-- | 1,2 | **CATEGORY OF CITED DOCUMENTS**<br>X: particularly relevant<br>A: technological background<br>O: non-written disclosure<br>P: intermediate document |
| | US - A - 3 318 372 (E. SHELL)<br>  * Column 2, line 40 to column 3, line 30; figure 1 *<br>--<br>./. | 1,6 | T: theory or principle underlying the invention<br>E: conflicting application<br>D: document cited in the application<br>L: citation for other reasons |
| | The present search report has been drawn up for all claims | | &: member of the same patent family, corresponding document |

| Place of search | Date of completion of the search | Examiner |
|---|---|---|
| The Hague | 08-12-1980 | HELOT |

EPO Form 1503.1  06.78

# EUROPEAN SEARCH REPORT

European Patent Office

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | US - A - 3 779 457 (W. CORNYN) <br> * Column 1, lines 18-38; column 7, line 7 to 14; figure 2 * | 1 | |

EPO Form 1503.2   06.78